# EUROPEAN PATENT APPLICATION

(11) **EP 3 989 508 A1**
(43) Date of publication of application: **27.04.2022**
(21) Application number: 19937051.1
(22) Date of filing: 13.08.2019
(51) Int. Cl.: H04L 29/12

(54) **METHOD AND SYSTEM FOR IMPLEMENTING DOMAIN NAME ACCESS ACCELRATION**

(30) Priority: 05.07.2019 CN 201910605508
(71) Applicant: Wangsu Science & Technology Co., Ltd., Shanghai 200030 (CN)
(72) Inventor: YOU, Wenbang, Shanghai 200030 (CN); LIN, Gengxin, Shanghai 200030 (CN); LIU, Tao, Shanghai 200030 (CN); SUN, Dakang, Shanghai 200030 (CN); SU, Zhiwei, Shanghai 200030 (CN)
(74) Representative: De Arpe Tejero, Manuel
(86) International application number: PCT/CN2019/100417
(87) International publication number: WO 2021/003798

(57) **Abstract**

The present disclosure discloses a method and a system for implementing domain name access acceleration, and relates to the field of network communication technology. The method includes: receiving, by a Content Delivery Network (CDN) node, domain name access traffic of a target domain name by means of a locally configured target Virtual Internet Protocol (VIP) address, and determining a target CDN manufacturer corresponding to the target VIP address; adding, by the CDN node, identification information of the target CDN manufacturer into domain name information of the domain name access traffic; and reading, by the CDN node, a resource configuration file corresponding to the target CDN manufacturer and the target domain name, and processing the domain name access traffic added with the identification information based on the resource configuration file. By adopting the technical solutions in the present disclosure, domain name access traffic generated by the switching between different CDN manufacturers can be effectively distinguished, which facilitates traffic settlement in a CDN cluster and expansion of CDN services.

## Description

### TECHNICAL FIELD

The present disclosure relates to the field of network communication technology, and more particularly, to a method and a system for implementing domain name access acceleration.

### BACKGROUND

With the continuous progress of Internet technologies, Content Delivery Network (CDN) services are developing rapidly. A domain name operator generally opens an accelerated access service for the same domain name at a plurality of CDN manufacturers simultaneously. Due to factors such as service costs and resource distribution, there is a need for traffic switching between different CDN manufacturers. That is, traffic for accessing domain names in each CDN manufacturer needs to be switched to a remaining CDN manufacturer for acceleration.

Specifically, after a domain name operator opens the accelerated access service for the same domain name at different CDN manufacturers, a resolution rule for domain names may be first configured in a domain name system (DNS). Therefore, the DNS system may guide received domain name resolution requests to resolution scheduling systems of different CDN manufacturers according to the configuration. Subsequently, the resolution scheduling system of the CDN manufacturer may determine whether a local CDN cluster provides an accelerated access service for the corresponding domain name access traffic. If the accelerated access service is not provided, the resolution scheduling system may forward the domain name resolution request to resolution scheduling systems of remaining CDN manufacturers, so as to respond to the domain name resolution request by means of the remaining CDN clusters.

In the process of implementing the present disclosure, inventors found that there are at least the following problems in the prior art.

At present, most CDN clusters mark the domain name access traffic with the domain name as an identifier. If there is domain name access traffic (which may be referred to as switching traffic) forwarded by remaining CDN clusters and domain name access traffic (which may be referred to as direct traffic) directly transmitted by a user terminal in a CDN cluster, the CDN manufacturer is not able to effectively distinguish the above two types of domain name access traffic, which is not conducive to traffic settlement and expansion of CDN services.

### SUMMARY

To solve problems in the prior art, embodiments of the present disclosure provide a method and a system for implementing domain name access acceleration. The described technical solutions are as follows.

In a first aspect, a method for implementing domain name access acceleration is provided, and the method includes:

receiving, by a Content Delivery Network (CDN) node, a domain name access traffic for a target domain name by means of a locally configured target Virtual Internet Protocol (VIP) address, and determining a target CDN manufacturer corresponding to the target VIP address;
adding, by the CDN node, identification information of the target CDN manufacturer into domain name information of the domain name access traffic; and
reading, by the CDN node, a resource configuration file corresponding to the target CDN manufacturer and the target domain name, and processing the domain name access traffic added with the identification information based on the resource configuration file.

Alternatively, the method also includes:
obtaining, by the CDN node, a domain name resource file of the target domain name when receiving a resource prefetch request for the target domain name carrying the identification information of the target CDN manufacturer; and
marking, by the CDN node, the domain name resource file according to the identification information, and storing the marked domain name resource file.

In this way, the CDN node may implement differentiated storage of the domain name resource files corresponding to different CDN manufacturers by marking the domain name resource files with the identification information of different CDN manufacturers.

Alternatively, the method also includes:
deleting, by the CDN node, a locally stored domain name resource file of the target domain name marked with the identification information when receiving a resource pushing request of the target domain name carrying the identification information of the target CDN manufacturer.

In this way, the CDN node may implement precise deletion of a domain name resource file corresponding to a specified CDN manufacturer by marking the domain name resource files with the identification information of different CDN manufacturers.

Alternatively, the adding, by the CDN node, identification information of the target CDN manufacturer into domain name information of the domain name access traffic includes:
taking, by the CDN node, the identification information of the target CDN manufacturer as a suffix, and splicing the suffix at a tail of the domain name information of the domain name access traffic.

In this way, the identification information of the CDN manufacturer is uniformly added at the tail of the domain name information in the form of a suffix, thereby facilitating to identify the domain name information and the identification information.

Alternatively, the processing the domain name access traffic added with the identification information comprises:
deleting, by the CDN node, when determining that the domain name access traffic needs to be transmitted to an origin station of the target domain name, the identification information of the target CDN manufacturer from the domain name information, and transmitting the domain name access traffic without the deleted identification information to the origin station.

In this way, by deleting the identification information of the CDN manufacturer from the domain name information before back-to-origin, it can effectively ensure the normal execution of the back-to-origin processing.

In a second aspect, a method for implementing domain name access acceleration is provided, and the method includes:
receiving, by a CDN resolution scheduling system, a domain name resolution request for a target domain name, and reading a domain name resolution configuration of the target domain name, wherein a VIP address corresponding to at least one CDN manufacturer is recorded in the domain name resolution configuration;
determining, by the CDN resolution scheduling system, a target VIP address corresponding to an origin CDN manufacturer of the domain name resolution request according to the domain name resolution configuration; and
feeding back, by the CDN resolution scheduling system, the target VIP address to a source terminal of the domain name resolution request, such that the source terminal transmits a domain name access traffic to the target VIP address.

Alternatively, the determining, by the CDN resolution scheduling system, a target VIP address corresponding to an origin CDN manufacturer of the domain name resolution request according to the domain name resolution configuration comprises:
determining, by the CDN resolution scheduling system, all available VIP addresses corresponding to the origin CDN manufacturer of the domain name resolution request according to the domain name resolution configuration; and
determining, by the CDN resolution scheduling system, the target VIP address among all the available VIP addresses according to network state and geographical state of the source terminal of the domain name resolution request.

Alternatively, after the receiving, by a CDN resolution scheduling system, a domain name resolution request for a target domain name, the method also includes:
transmitting, by the CDN resolution scheduling system, the domain name resolution request to a preset remaining CDN resolution scheduling system if the domain name resolution configuration of the target domain name is absent or empty.

Alternatively, the method also includes:
receiving, by the CDN resolution scheduling system, a service configuration request carrying domain name information of the target domain name and identification information of a target CDN manufacturer; and
determining, by the CDN resolution scheduling system, the target VIP address, and setting the domain name resolution configuration of the target domain name based on the target VIP address, the domain name information, and the identification information.

In a third aspect, there is provided a system for implementing domain name access acceleration. The system includes a CDN node and a CDN resolution scheduling system, wherein the CDN node is configured to execute the method as described in the first aspect, and the CDN resolution scheduling system is configured to execute the method as described in the second aspect.

In a fourth aspect, there is provided a network device, which includes a processor and a memory. The memory stores at least one instruction, at least one program, and a code set or an instruction set. The at least one instruction, the at least one program, and the code set or instruction set are loaded and executed by the processor to implement the method for implementing domain name access acceleration as described in the first aspect.

In a fifth aspect, there is provided a computer-readable storage medium, wherein the storage medium stores at least one instruction, at least one program, and a code set or an instruction set. The at least one instruction, the at least one program, and the code set or instruction set are loaded and executed by a processor to implement the method for implementing domain name access acceleration as described in the first aspect.

The technical solutions provided by the embodiments of the present disclosure achieve the following beneficial effects.

In an embodiment of the present disclosure, a CDN node receives a domain name access traffic for a target domain name by means of a locally configured target VIP address, determines a target CDN manufacturer corresponding to the target VIP address, adds identification information of the target CDN manufacturer into domain name information of the domain name access traffic, reads a resource configuration file corresponding to the target CDN manufacturer and the target domain name, and processes the domain name access traffic added with the identification information based on the resource configuration file. In this way, for domain name access traffic of the same domain name, sources of the domain name access traffic are identified by distinguishing VIP addresses at the CDN node, and the domain name access traffic from different sources is marked by adding the identification information of the CDN manufacturers inside the CDN cluster, such that the domain name access traffic of the same domain name generated by the switching between different CDN manufacturers may be effectively distinguished, which facilitates traffic settlement in the CDN cluster and expansion of CDN services.

### BRIEF DESCRIPTION OF THE DRAWINGS

To describe the technical solutions of embodiments of the present disclosure more clearly, the accompanying drawings required for describing the embodiments will be briefly introduced below. Apparently, the accompanying drawings in the following description are merely some embodiments of the present disclosure. To those of ordinary skills in the art, other accompanying drawings may also be derived from these accompanying drawings without creative efforts.
FIG. 1 is a schematic diagram of a network architecture for implementing domain name access acceleration according to an embodiment of the present disclosure;
FIG. 2 is a flowchart of a method for implementing domain name access acceleration according to an embodiment of the present disclosure;
FIG. 3 is a schematic diagram of prefetching/pushing a domain name resource file according to an embodiment of the present disclosure; and
FIG. 4 is a schematic structural diagram of a network device according to an embodiment of the present disclosure.

### DETAILED DESCRIPTION

To make the objectives, technical solutions and advantages of the present disclosure clearer, the embodiments of the present disclosure are further described below in detail with reference to the accompanying drawings.

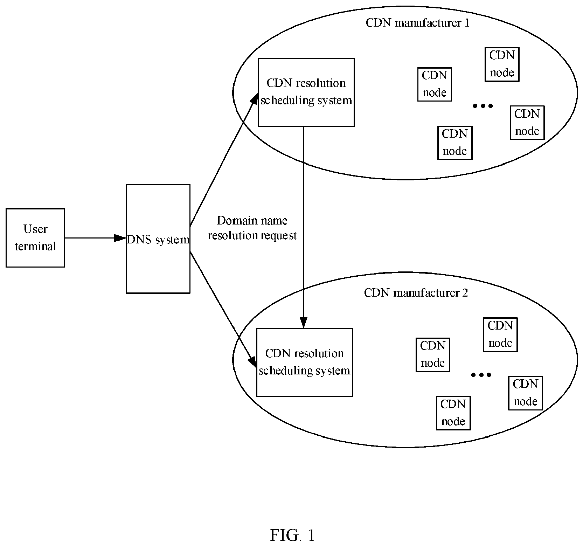

An embodiment of the present disclosure provides a method for implementing domain name access acceleration, which may be applied to a Content Delivery Network (CDN) cluster and specifically executed by a CDN resolution scheduling system and a CDN node. The CDN cluster may at least include a CDN resolution scheduling system and a large number of CDN nodes. The CDN resolution scheduling system may be configured to receive a domain name resolution request sent by an external device (which may be a DNS system or a resolution scheduling system of a remaining CDN cluster), and feed back different domain name access addresses in the CDN cluster according to a preset domain name resolution configuration. The CDN node may cache domain name resource files and resource configuration files for a large number of domain names. When receiving domain name access traffic, the CDN node may process the domain name access traffic according to the above resource configuration files. The above CDN resolution scheduling system may also perform data interaction with resolution scheduling systems of remaining CDN clusters. That is, the CDN resolution scheduling system may forward the received domain name resolution request to the resolution scheduling systems of the remaining CDN clusters, so as to implement traffic switching between different CDN manufacturers. A network architecture constituted by the plurality of CDN manufacturers may be as shown in FIG. 1. Functions of the CDN resolution scheduling system and the CDN node may be implemented by a single network device, or may be implemented by a device group constituted by a plurality of network devices. The above network device may include a processor, a memory, and a transceiver. The processor may be configured to perform the processing for implementing domain name access acceleration in the following procedures. The memory may be configured to store data needed and generated during the processing. The transceiver may be configured to receive and transmit related data during the processing.

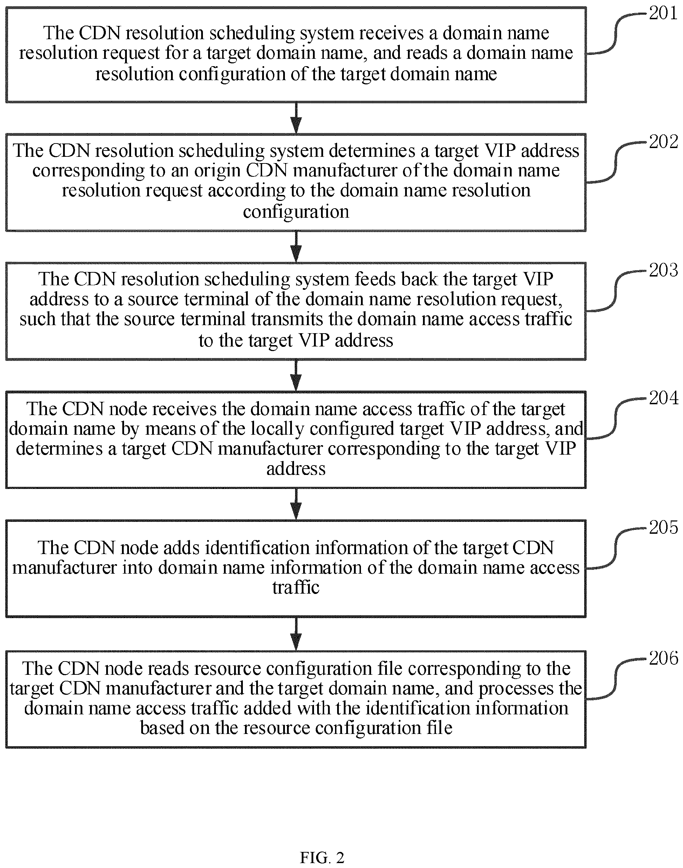

Processing procedures as shown in FIG. 2 will be described in detail with reference to specific embodiments as follows.

In Step 201, the CDN resolution scheduling system receives a domain name resolution request for a target domain name, and reads a domain name resolution configuration of the target domain name.

A Virtual IP (VIP) address corresponding to at least one CDN manufacturer is recorded in the domain name resolution configuration.

In implementation, a domain name resolution configuration corresponding to each domain name may be set in advance in the CDN resolution scheduling system, wherein the VIP address corresponding to the at least one CDN manufacturer may be recorded in the domain name resolution configuration. Specifically, the domain name resolution configuration may be DNSMap, which is configured to map different domain names to different VIP addresses. In this way, after receiving the domain name resolution request for the target domain name, the CDN resolution scheduling system may read the locally stored domain name resolution configuration of the target domain name. It is worth mentioning that, as shown in FIG. 1, after opening the domain name access acceleration service in the plurality of CDN manufacturers, a domain name operator of the target domain name may add, into the DNS system, a mapping relationship between the target domain name and the resolution scheduling systems of the plurality of CDN manufacturers. In this way, when a user wants to access the target domain name, a user terminal may transmit a domain name resolution request for the target domain name to the DNS system. Then, the DNS system may forward the domain name resolution request to the resolution scheduling system of the CDN manufacturer according to a preset resolution rule (i.e., the mapping relationship between the target domain name and the resolution scheduling systems of the plurality of CDN manufacturers). The resolution scheduling system may be the above CDN resolution scheduling system or a remaining CDN resolution scheduling system. After receiving the above domain name resolution request, the remaining CDN resolution scheduling system may also forward the domain name resolution request to the CDN resolution scheduling system, so as to accelerate the corresponding domain name access traffic by means of the CDN cluster to which the CDN resolution scheduling system belongs. Therefore, the domain name resolution request received by the CDN resolution scheduling system may be forwarded by the DNS system or may be forwarded by the remaining CDN resolution scheduling system.

Alternatively, when it is unable to make an effective response to the domain name resolution request, the CDN resolution scheduling system may forward the domain name resolution request to remaining CDN resolution scheduling systems. Correspondingly, after Step 201, the following processing may be performed: if the domain name resolution configuration of the target domain name is absent or empty, the CDN resolution scheduling system transmits the domain name resolution request to a preset remaining CDN resolution scheduling system.

In implementation, after the CDN resolution scheduling system receives the domain name resolution request for the target domain name, if it is unable to read the domain name resolution configuration of the target domain name or the read domain name resolution configuration of the target domain name is empty, the CDN resolution scheduling system may transmit the domain name resolution request to a preset remaining CDN resolution scheduling system. It is worth mentioning that the remaining CDN resolution scheduling system here may be pre-configured in CDN resolution scheduling systems, and may be specifically configured in units of domain names. For example, domain name A corresponds to CDN resolution scheduling system 1, and domain name B corresponds to CDN resolution scheduling system 2. In this way, the CDN resolution scheduling system may select the CDN resolution scheduling system corresponding to the pre-configured target domain name when transmitting the domain name resolution request to the remaining CDN resolution scheduling system.

In Step 202, the CDN resolution scheduling system determines a target VIP address corresponding to an origin CDN manufacturer of the domain name resolution request according to the domain name resolution configuration.

In implementation, after reading the domain name resolution configuration of the target domain name, the CDN resolution scheduling system may first determine the origin CDN manufacturer of the domain name access traffic. Here, based on the description of Step 201, if the domain name access traffic is directly sent to the CDN resolution scheduling system by the user terminal, the origin CDN manufacturer is a CDN manufacturer to which the CDN resolution scheduling system belongs, and if the domain name access traffic is forwarded to the CDN resolution scheduling system by the remaining CDN resolution scheduling system, the origin CDN manufacturer is a CDN manufacturer to which the remaining CDN resolution scheduling system belongs. Then, the CDN resolution scheduling system may determine the target VIP address corresponding to the origin CDN manufacturer of the domain name resolution request according to the domain name resolution configuration of the target domain name.

Alternatively, the processing of selecting, by the CDN resolution scheduling system, a VIP address for the domain name resolution request in the Step 202 may be specifically as follows. The CDN resolution scheduling system determines all available VIP addresses corresponding to the origin CDN manufacturer of the domain name resolution request according to the domain name resolution configuration. Then, the CDN resolution scheduling system determines the target VIP address from all the available VIP addresses according to network state and geographical state of a source terminal of the domain name resolution request.

In implementation, after receiving the domain name resolution request, the CDN resolution scheduling system may determine the origin CDN manufacturer of the domain name resolution request, and then obtain all the available VIP addresses corresponding to the origin CDN manufacturer in the CDN cluster to which the CDN resolution scheduling system belongs. Then, the CDN resolution scheduling system may determine, from all the available VIP addresses according to the network state and geographical state of the source terminal of the domain name resolution request, the target VIP address which is closest to a geographical location of the source terminal and belongs to the same network operator as the source terminal. Of course, when all the available VIP addresses corresponding to the origin CDN manufacturer are obtained, a region where the source terminal of the domain name resolution request is located may be first determined, and then all the available VIP addresses corresponding to the origin CDN manufacturer in this region are obtained.

In Step 203, the CDN resolution scheduling system feeds back the target VIP address to the source terminal of the domain name resolution request, such that the source terminal transmits the domain name access traffic to the target VIP address.

The source terminal of the domain name resolution request is a user terminal that transmits the domain name resolution request.

Alternatively, the CDN resolution scheduling system may set the domain name resolution configuration based on a service configuration request, and the corresponding processing may be as follows. The CDN resolution scheduling system receives the service configuration request carrying domain name information of the target domain name and identification information of the target CDN manufacturer, determines the target VIP address, and sets the domain name resolution configuration of the target domain name based on the target VIP address, the domain name information, and the identification information.

In implementation, in the process of opening the acceleration service for the domain name access traffic of the target domain name of the target CDN manufacturer in the CDN cluster, the resolution scheduling system of the CDN cluster may receive the service configuration request carrying the domain name information of the target domain name and the identification information of the target CDN manufacturer. Subsequently, the CDN resolution scheduling system may assign a VIP address to the target CDN manufacturer and the target domain name. Specifically, the CDN resolution scheduling system may determine an unused target VIP address, and then set the domain name resolution configuration of the target domain name based on the target VIP address, the domain name information of the target domain name, and the identification information of the target CDN manufacturer.

In Step 204, the CDN node receives the domain name access traffic of the target domain name through the locally configured target VIP address, and determines a target CDN manufacturer corresponding to the target VIP address.

In implementation, if the CDN manufacturer supports acceleration service for the domain name access traffic forwarded by a remaining CDN manufacturer, different VIP addresses may be planned for different CDN manufacturers on the CDN node in advance. For the same domain name, different VIP addresses may be used to receive the domain name access traffic of different CDN manufacturers under this domain name. For example, VIP address 1 is used to receive the domain name access traffic under domain name X forwarded by CDN manufacturer A, VIP address 2 is used to receive the domain name access traffic under domain name X forwarded by CDN manufacturer B, and VIP address 3 is used to receive the domain name access traffic under domain name X directly sent by the user terminal. It may be understood that one VIP address may be used to receive domain name access traffic under a plurality of domain names of the same CDN manufacturer. In this way, the CDN node may continuously monitor a plurality of locally configured VIP addresses, and when the domain name access traffic under the target domain name is received through the locally configured target VIP address, the CDN node may determine the target CDN manufacturer corresponding to the target VIP address.

In Step 205, the CDN node adds identification information of the target CDN manufacturer into domain name information of the domain name access traffic.

In implementation, after determining the target CDN manufacturer corresponding to the target VIP address, the CDN node may extract the domain name information (such as URL of the domain name access traffic) carried by the domain name access traffic, and then add the identification information of the target CDN manufacturer into the domain name information. Specifically, the CDN node may take the identification information of the target CDN manufacturer as a suffix, and splice the suffix at a tail of the domain name information of the domain name access traffic. For example, if the identification information of the target CDN manufacturer is "AAA" and the domain name information is "www.aaa.com", the spliced domain name information is "www.aaa.com.AAA". It is to be noted that if the target CDN manufacturer is the CDN manufacturer to which the CDN node belongs, that is, if the domain name access traffic is not the traffic forwarded to the target CDN manufacturer by a remaining CDN manufacturer, it is unnecessary to add the identification information into the domain name information, thereby reducing the processing amount for adding the identification information, and saving processing resources of the CDN node.

In Step 206, the CDN node reads resource configuration file corresponding to the target CDN manufacturer and the target domain name, and processes the domain name access traffic added with the identification information based on the resource configuration file.

In implementation, after determining the target CDN manufacturer corresponding to the target VIP address, the CDN node may read the locally stored resource configuration file corresponding to the target CDN manufacturer and the target domain name, and then process the domain name access traffic added with the identification information based on the resource configuration file. Here, processing the domain name access traffic may at least include: (1) responding to the domain name access traffic based on the locally stored domain name resource file; (2) forwarding the domain name access traffic to a parent node; and (3) performing back-to-origin processing on the domain name access traffic.

Alternatively, when performing back-to-origin processing on the domain name access traffic, the CDN node may delete the identification information of the CDN manufacturer from the domain name access traffic. Correspondingly, a part of the processing in Step 206 may be as follows. When determining that it needs to transmit the domain name access traffic to an origin station of the target domain name, the CDN node deletes the identification information of the target CDN manufacturer from the domain name information, and transmits the domain name access traffic without the deleted the identification information to the origin station.

In implementation, after determining that it is necessary to transmit domain name access traffic to the origin station of the target domain name based on the resource configuration file, the CDN node may first read the domain name information from the domain name access traffic, then delete the identification information of the target CDN manufacturer from the domain name information, and subsequently transmit the domain name access traffic without the deleted the identification information to the origin station. It may be understood that if the CDN node transmits the domain name access traffic to the parent node in the CDN cluster, there is no need to delete the identification information of the target CDN manufacturer from the domain name information.

Alternatively, in the process of prefetching and storing the domain name resource file, the CDN node may distinguish the domain name resource files corresponding to different CDN manufacturers by adding the identification information of the CDN manufacturers. The corresponding processing may be as follows. When receiving a resource prefetching request for a target domain name carrying the identification information of the target CDN manufacturer, the CDN node obtains a domain name resource file of the target domain name, then the CDN node marks the domain name resource file according to the identification information, and stores the marked domain name resource file. In this way, it may implement differentiated storage of the domain name resource files corresponding to different CDN manufacturers by marking the domain name resource files with the identification information of different CDN manufacturers by the CDN node.

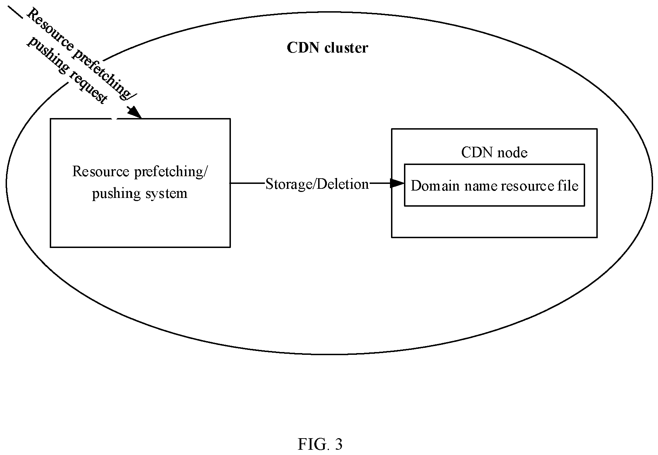

In implementation, the domain name operator may store the domain name resource file in the CDN node in advance by means of resource prefetching. Similarly, the CDN manufacturer may deploy the domain name resource file in remaining CDN manufacturers' nodes in advance by means of resource prefetching. In this way, when the target CDN manufacturer wants to deploy the domain name resource file of the target domain name in the CDN node in advance, the target CDN manufacturer may submit a resource prefetching request to a resource prefetching system of the CDN cluster to which the CDN node belongs, wherein the resource prefetching request may carry the target domain name and the identification information of the target CDN manufacturer. Subsequently, the resource prefetching system may transmit, to the CDN node, the resource prefetching request of the target domain name carrying the identification information of the target CDN manufacturer. After receiving the above resource prefetching request, the CDN node may obtain the domain name resource file of the target domain name from the origin station of the target domain name, and then may mark the domain name resource file according to the identification information of the target CDN manufacturer, and store the marked domain name resource file. In this way, the CDN node may respond to the domain name access traffic transmitted by different CDN manufacturers based on the stored domain name resource files of different CDN manufacturers. The above processing may be shown with reference to FIG. 3.

Alternatively, the CDN node may delete a domain name resource file of a specified CDN manufacturer based on a resource pushing request, and the corresponding processing may be as follows. When receiving a resource pushing request of the target domain name carrying the identification information of the target CDN manufacturer, the CDN node deletes a locally stored domain name resource file of the target domain name marked with the identification information.

In implementation, the domain name operator may delete the stored domain name resource files in the CDN cluster by means of resource pushing. Similarly, the CDN manufacturer may also delete the domain name resource files pre-deployed in CDN nodes of remaining CDN manufacturers by means of resource pushing. In this way, when the target CDN manufacturer wants to delete the domain name resource file of the target domain name deployed in the CDN node, the target CDN manufacturer may submit a resource pushing request to a resource pushing system of the CDN cluster to which the CDN node belongs, wherein the resource pushing request may carry the target domain name and the identification information of the target CDN manufacturer. Subsequently, the resource pushing system may transmit, to the CDN node, the resource pushing request of the target domain name carrying the identification information of the target CDN manufacturer. After receiving the above resource pushing request, the CDN node may delete the locally stored domain name resource file of the target domain name marked with the identification information of the CDN manufacturer. The above processing may be shown with reference to FIG. 3.

In the embodiments of the present disclosure, a CDN node receives a domain name access traffic of a target domain name by means of a locally configured target VIP address, determines a target CDN manufacturer corresponding to the target VIP address, adds identification information of the target CDN manufacturer into domain name information of the domain name access traffic, reads a resource configuration file corresponding to the target CDN manufacturer and the target domain name, and processes the domain name access traffic added with the identification information based on the resource configuration file. In this way, for domain name access traffic of the same domain name, sources of the domain name access traffic are identified by distinguishing VIP addresses at the CDN node, and the domain name access traffic from different sources is marked by adding the identification information of CDN manufacturers inside the CDN cluster, such that the domain name access traffic of the same domain name generated by the switching between different CDN manufacturers may be effectively distinguished, which facilitates traffic settlement in the CDN cluster and the expansion of CDN service.

Based on the same technical concept, an embodiment of the present disclosure also provides a system for implementing domain name access acceleration. The system includes a CDN node and a CDN resolution scheduling system, wherein the CDN node is configured to perform the processing implemented by the CDN node in the above-mentioned embodiments, and the CDN resolution scheduling system is configured to perform the processing implemented by the CDN resolution scheduling system in the above-mentioned embodiments.

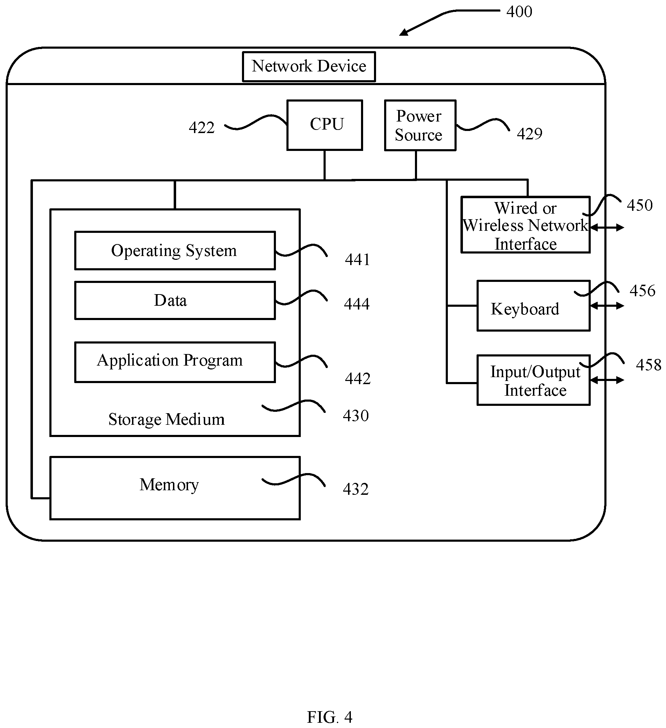

FIG. 4 is a schematic structural diagram of a network device according to an embodiment of the present disclosure. The network device 400 may have relatively large differences due to different configurations or performances, and may include one or more central processing units (CPU) 422 (e.g., one or more processors) and a memory 432, one or more storage media 430 storing an application program 442 or data 444 (e.g., one or more mass storage devices). The memory 432 and the storage media 430 may store temporarily or permanently. The program stored in the storage media 430 may include one or more modules (not shown in this drawing), each of which may include a series of instruction operations executed on the network device 400. Still further, the CPU 422 may be configured to communicate with the storage media 430, and a series of instructions operations in the storage media 430 are executed on the network device 400.

The network device 400 may also include one or more power sources 429, one or more wired or wireless network interfaces 450, one or more input-output interfaces 458, one or more keyboards 456, and/or one or more operating systems 441 such as Windows Server, Mac OS X, Unix, Linux, FreeBSD and the like.

The network device 400 may also include a memory, and one or more programs stored in the memory, wherein the one or more programs are configured to be executed by one or more processors, and include instructions configured for implementing the above domain name access acceleration.

It should be understood for those of ordinary skill in the art that all or part of steps in the above embodiments may be implemented by hardware, or by a related hardware instructed by a program. The program may be stored in a computer readable medium, and the storage medium described as above may be a read-only memory, a magnetic disc, an optical disc or the like.

The embodiments described above are only illustrated as preferred embodiments of the present disclosure, and are not intended to limit the present disclosure. Any modification, equivalent replacement and improvement made within the spirit and principle of the present disclosure shall fall within the protection scope of the present disclosure.

## Claims

1. A method for implementing domain name access acceleration, comprising:
receiving, by a Content Delivery Network (CDN) node, domain name access traffic of a target domain name by means of a locally configured target Virtual Internet Protocol (VIP) address, and determining a target CDN manufacturer corresponding to the target VIP address;
adding, by the CDN node, identification information of the target CDN manufacturer into domain name information of the domain name access traffic; and
reading, by the CDN node, a resource configuration file corresponding to the target CDN manufacturer and the target domain name, and processing the domain name access traffic added with the identification information based on the resource configuration file.

2. The method according to claim 1, further comprising:
obtaining, by the CDN node, a domain name resource file of the target domain name when receiving a resource prefetch request for the target domain name carrying the identification information of the target CDN manufacturer; and
marking, by the CDN node, the domain name resource file according to the identification information, and storing the marked domain name resource file.

3. The method according to claim 1, further comprising:
deleting, by the CDN node, a locally stored domain name resource file of the target domain name marked with the identification information when receiving a resource pushing request for the target domain name carrying the identification information of the target CDN manufacturer.

4. The method according to claim 1, wherein the adding, by the CDN node, identification information of the target CDN manufacturer into domain name information of the domain name access traffic comprises:
taking, by the CDN node, the identification information of the target CDN manufacturer as a suffix, and splicing the suffix at a tail of the domain name information of the domain name access traffic.

5. The method according to claim 1, wherein the processing the domain name access traffic added with the identification information comprises:
deleting, by the CDN node, when determining that the domain name access traffic needs to be transmitted to an origin station of the target domain name, the identification information of the target CDN manufacturer from the domain name information, and transmitting the domain name access traffic without the deleted identification information to the origin station.

6. A method for implementing domain name access acceleration, comprising:
receiving, by a CDN resolution scheduling system, a domain name resolution request for a target domain name, and reading a domain name resolution configuration of the target domain name, wherein a Virtual IP (VIP) address corresponding to at least one CDN manufacturer is recorded in the domain name resolution configuration;
determining, by the CDN resolution scheduling system, a target VIP address corresponding to an origin CDN manufacturer of the domain name resolution request according to the domain name resolution configuration; and
feeding back, by the CDN resolution scheduling system, the target VIP address to a source terminal of the domain name resolution request, such that the source terminal transmits domain name access traffic to the target VIP address.

7. The method according to claim 6, wherein the determining, by the CDN resolution scheduling system, a target VIP address corresponding to an origin CDN manufacturer of the domain name resolution request according to the domain name resolution configuration comprises:
determining, by the CDN resolution scheduling system, all available VIP addresses corresponding to the origin CDN manufacturer of the domain name resolution request according to the domain name resolution configuration; and
determining, by the CDN resolution scheduling system, the target VIP address among all the available VIP addresses according to network state and geographical state of the source terminal of the domain name resolution request.

8. The method according to claim 6, wherein after the receiving, by a CDN resolution scheduling system, a domain name resolution request for a target domain name, the method further comprises:
transmitting, by the CDN resolution scheduling system, the domain name resolution request to a preset remaining CDN resolution scheduling system when the domain name resolution configuration of the target domain name is absent or empty.

9. The method according to claim 6, further comprising:
receiving, by the CDN resolution scheduling system, a service configuration request carrying domain name information of the target domain name and identification information of a target CDN manufacturer; and
determining, by the CDN resolution scheduling system, the target VIP address, and setting the domain name resolution configuration of the target domain name based on the target VIP address, the domain name information, and the identification information.

10. A system for implementing domain name access acceleration, comprising a CDN node and a CDN resolution scheduling system, wherein the CDN node is configured to execute the method according to any one of claims 1 to 5, and the CDN resolution scheduling system is configured to execute the method according to any one of claims 6 to 9.

11. A network device, comprising:
at least one processor; and
a memory in communication connection with the at least one processor; wherein
the memory stores instructions executable by the at least one processor, and wherein the instructions are executed by the at least one processor to implement the method according to any one of claims 1 to 6.

12. A computer-readable storage medium, storing a computer program thereon, wherein the computer program is executed by a processor to implement the method according to any one of claims 1 to 6.
